# EUROPEAN PATENT APPLICATION

(11) **EP 4 375 849 A2**
(43) Date of publication of application: **29.05.2024**
(21) Application number: 23200952.2
(22) Date of filing: 29.09.2023
(51) Int. Cl.: G06F 16/25

(54) **APPARATUS PROCESSING EVENT INFORMATION, METHOD AND COMPUTER READABLE RECORDING MEDIUM THEREOF**

(30) Priority: 04.10.2022 KR 20220126556
(71) Applicant: Hyperconnect LLC, Seoul 06164 (KR)
(72) Inventor: NOH, Hyun Jong, 06164 Seoul (KR); JANG, Hyeck Bin, 06164 Seoul (KR); BAE, Sung Hyouk, 06164 Seoul (KR)
(74) Representative: Zimmermann & Partner Patentanwälte mbB

(57) **Abstract**

An apparatus and a method for collecting and aggregating events to extract information, and a computer-readable recording medium are provided. In an example embodiment, the method for processing pieces of event information in a collection server (110), includes: checking (S210) whether pieces of target event information has been obtained from a message queue (130) in which the pieces of event information has been stored while being sorted; when the pieces of target event information is checked to be obtained, converting (S220) at least some of the obtained pieces of target event information so as to correspond to a schema of a first database (140) and recording the converted pieces of target event information in the first database (140); and generating (S230) a notification indicating that the pieces of target event information are obtained.

## Description

### CROSS-REFERENCE TO RELATED APPLICATION(S)

This application claims the benefit of Korean Patent Application No. 10-2022-0126556, filed on October 4, 2022, in the Korean Intellectual Property Office, the disclosure of which is incorporated herein by reference.

### BACKGROUND

### 1. Field of the Invention

The present disclosure relates to an apparatus and a method for collecting and aggregating events and extracting information and a computer readable recording medium.

### 2. Description of the Related Art

In recent years, a software-as-a-service (SaaS) in which software and its related data are hosted to a central server and a user accesses to the SaaS through a client, has been attracting attention. The reason for this is that the data is stored in a cloud server to enhance stability and the user may freely access to the SaaS through the client without an additional software.

However, the use of the SaaS may reduce a degree of freedom for the client to directly build applications and services. In this regard, a platform-as-a-service (PaaS) has been proposed for a client who wants to build an exclusive software.

In the course of providing various services to end-users through such a PaaS, a large number of events occur. How to process pieces of information about such events has an important meaning for a host of the PaaS or the end-users.

### SUMMARY

The present disclosure was made to solve the above-mentioned matters, and the present disclosure is for the purpose of providing an apparatus and method for collecting and aggregating pieces of event information that are produced in association with an application and generating meaningful information.

Technical matters to be achieved in the present disclosure are not limited to the technical matters described above, and other technical matters will be inferred from the following example embodiments.

An aspect provides a computer-implemented method for processing pieces of event information in a collection server which includes: checking whether or not pieces of target event information has been obtained from a message queue in which the pieces of event information has been stored while being sorted; when the pieces of target event information is checked to be obtained, converting at least some of the obtained pieces of target event information so as to correspond to a schema of a first database and recording the converted pieces of target event information in the first database; and generating a notification indicating that the pieces of target event information are obtained.

In an aspect, the collection server may be matched to each of partitions in which the pieces of event information in the message queue are stored and may be configured to function as a consumer for the message queue.

In an aspect, the method may further include: when the pieces of target event information are checked to be obtained, recording position information of the pieces of target event information in the message queue in a cache.

In an aspect, the method may further include: when the pieces of target event information are checked to not be obtained, sending a reprocessing request according to an event collection failure to the message queue.

In an aspect, the generating of the notification may include generating a webhook corresponding to the pieces of target event information.

Another aspect also provides a method for processing pieces of event information in an aggregation server which includes: requesting a lock to an application for which the pieces of event information are to be aggregated to a remote reference database; when the lock is obtained, aggregating the pieces of event information for the application on a specific time basis in a specific aggregation section range; and after the aggregating of the pieces of event information is completed, returning the lock to the remote reference database.

In an aspect, when the lock is not obtained, the requesting of the lock may be performed with respect to another application for which the pieces of event information are to be aggregated.

In an aspect, the method may further include: inquiring a list of applications for each of which the pieces of event information are to be aggregated; and obtaining the list of the applications, and the requesting of the lock, the aggregating the pieces of event information and the returning of the lock may be repeatedly performed in a loop manner with respect to the list of the applications.

In an aspect, the method may further include: inquiring pieces of event information according to a first sub-schema in a set pre-processing section range with reference to a first database in which the pieces of event information collected by a collection server are recorded; inquiring metric event information with reference to the first database; converting the pieces of event information according to the first sub-schema into pieces of event information according to a second sub-schema based on the metric event information; and recording the pieces of event information according to the second sub-schema in the first database.

In an aspect, the aggregating of the pieces of event information may include: aggregating the pieces of event information for the application on a first time basis in a first aggregation section range with reference to a first database in which the pieces of event information collected by a collection server are recorded; and recording the pieces of event information aggregated on the first time basis in a second database.

In an aspect, the aggregating of the pieces of event information may include: inquiring pieces of event information aggregated on the first time basis in a second aggregation section range with reference to the second database; aggregating, on a second time basis, the pieces of event information aggregated on the first time basis; and recording the pieces of event information aggregated on the second time basis in the second database.

In an aspect, the aggregating of the pieces of event information may include: inquiring a preset type of pieces of event information for the application in a specific aggregation section range with reference to a first database in which the pieces of event information collected by a collection server are recorded; calculating application usage data in the specific aggregation section range based on the inquired preset type of pieces of event information; and recording the calculated application usage data in a second database or a third database accessible by a provider who provides the application or a consumer who uses the application.

In an aspect, the preset type of pieces of event information may include call event information generated when a call is made in the application, and the application usage data may include at least one of a number of occurrences of call events and a call event duration time in the application.

In an aspect, the preset type of pieces of event information may include call space event information that occurs when a call space is established in the application, and the application usage data may include at least one of a number of occurrences of call space events and a call space event duration time in the application.

Yet another aspect also provides a method for processing pieces of event information in a collection server and an aggregation server which includes: checking whether or not pieces of target event information has been obtained from a message queue in which the pieces of event information has been stored while being sorted; when the pieces of target event information is checked to be obtained, converting at least some of the obtained pieces of target event information so as to correspond to a schema of a first database and recording the converted pieces of target event information in the first database; and aggregating the pieces of event information recorded in the first database on a specific time basis in a specific aggregation section range with reference to the first database.

Still another aspect provides an apparatus used for a collection server that processes pieces of event information which includes: an input/output interface; a memory storing instructions; and a processor connected to the input/output interface and the memory, and the processor may be configured to: check whether or not pieces of target event information has been obtained from a message queue in which the pieces of event information has been stored while being sorted; when the pieces of target event information is checked to be obtained, convert at least some of the obtained pieces of target event information so as to correspond to a schema of a first database and recording the converted pieces of target event information in the first database; and generate a notification indicating that the pieces of target event information are obtained.

Still another aspect provides an apparatus used for an aggregation server that processes pieces of event information which includes: an input/output interface; a memory storing instructions; and a processor connected to the input/output interface and the memory, and the processor may be configured to: request a lock to an application for which the pieces of event information are to be aggregated to a remote reference database; when the lock is obtained, aggregate the pieces of event information for the application on a specific time basis in a specific aggregation section range; and after the aggregation of the pieces of event information is completed, return the lock to the remote reference database.

Further, still another aspect provides a computer-readable recording medium that records a program for executing the above-described method.

Specific details of other example embodiments are included in the detailed description and the drawings.

According to the present disclosure, by collecting pieces of event information from a message queue in a collection server, converting the collected pieces of event information in conformity with a schema of a database, recording the converted pieces of event information in the database, and generating a notification indicating that the pieces of event information are obtained, it is possible to automatically record and store information about externally-generated events in conformity with an internal format of a platform.

Furthermore, according to the present disclosure, by using collected pieces of information in an aggregation server, or by reusing information obtained by primarily processing the collected pieces of information, it is possible to perform an aggregation process in various forms, thus easily generating necessary data for a provider who provides an application or consumers who use the first-time application.

Furthermore, according to the present disclosure, by configuring an organic and general-purpose architecture including a collection server and an aggregation server to enable collection and aggregation of pieces of event information and an additional processing, it is possible to utilize such a configuration in various services.

Effects are not limited to the aforementioned effects, and other effects not mentioned will be clearly understood by those skilled in the art from the description of the claims.

### BRIEF DESCRIPTION OF THE DRAWINGS

FIG. 1 is a schematic configuration view illustrating an environment in which a collection server and an aggregation server operate according to an example embodiment.
FIG. 2 is a flowchart for explaining an event processing method performed by the collection server according to an example embodiment.
FIG. 3 is an explanatory view illustrating an event processing process performed by the collection server.
FIG. 4 is a flowchart for explaining an event processing method performed by the aggregation server according to an example embodiment.
FIG. 5 is a flowchart for explaining an event processing method performed for a plurality of applications, in context with FIG. 4.
FIG. 6 is an explanatory view schematically illustrating the event processing process performed by the aggregation server.
FIG. 7 is a flowchart for explaining a pre-processing process in the aggregation server, in context with FIG. 4.
FIG. 8 is an explanatory diagram illustrating the pre-processing process in the aggregation server.
FIG. 9 is a flowchart for explaining a first type of aggregation process in the aggregation server, in context with FIG. 4.
FIG. 10 is an explanatory diagram illustrating the first type of aggregation process in the aggregation server.
FIG. 11 is a flowchart for explaining a second type of aggregation process in the aggregation server, in context with FIG. 4.
FIG. 12 is an explanatory view illustrating the second type of aggregation process in the aggregation server.
FIG. 13 is a flowchart for a third and fourth type of aggregation process in the aggregation server, in context with FIG. 4.
FIG. 14 is an explanatory view illustrating a third type of aggregation process in the aggregation server.
FIG. 15 is an explanatory view illustrating a fourth type of aggregation process in the aggregation server.
FIG. 16 is an explanatory view of classes for implementing an operation of the aggregation server.
FIG. 17 is a block diagram illustrating the collection server or the aggregation server according to an example embodiment.

### DETAILED DESCRIPTION

Hereinafter, specific example embodiments will be described with reference to the drawings. The following detailed description is provided for the sake of easier comprehensive understanding of a method, an apparatus, and/or a system described herein. However, this is merely an example and example embodiments described herein are not limited thereto.

In the description of the present disclosure, when it is determined that a detailed description of a related known function or configuration may unnecessarily obscure the gist of the present disclosure, the detailed description thereof will be omitted. Further, terms to be described later are terms that are defined in consideration of respective functions in example embodiments described herein, and may be changed depending on the intention of a user or an operator, legal precedents, and the like. Accordingly, the terms used herein may be defined based on the content throughout the specification. The terms used in the detailed description are for the purpose of merely describing example embodiments, but may not be construed in a limited way. The singular form described herein may include the plural form unless the context clearly dictates otherwise. The expression "comprises", "includes" or the like are intended to include features, numeric characters, steps, operations, constituent elements, some or a combination thereof, but may be constructed not to exclude one or more other features, numeric characters, steps, operations, constituent elements, some or a combination thereof in addition to the above-described terms.

Terms used in example embodiments are general terms that are currently widely used while their respective functions in the present disclosure are taken into consideration. However, the terms may be changed depending on the intention of one of ordinary skilled in the art, legal precedents, emergence of new technologies, and the like. Also, in particular cases, terms that are arbitrarily selected by the applicant of the present disclosure may be used, and in this case, the meanings of these terms may be described in detail in the corresponding disclosure. Accordingly, the terms used herein should be defined based on the meanings thereof and the content throughout the specification, instead of a simple name of the term.

When a part "comprise or includes" a constituent element through the specification, this means that the part may further include other constituent elements, rather than excluding other constituent elements, unless other stated. In addition, the terms such as "part," "---er, ---or," "module" and the like used herein may refer to a unit that performs at least one function or operation, which may be realized as hardware or software, or may be realized as a combination of hardware and software, which may not be clearly distinguished in a specific operation unlike example embodiments described herein.

The expression "at least one of a, b, and c" may include the following meanings: 'a alone', 'b alone', 'c alone', 'both a and b together', 'both a and c together', 'both B and c together', or 'all three of a, b, and c together'.

In the following description, when a signal or information is "sent," "communicated," "transmitted," "received", and similar terms are used, this means that a constituent element directly sends the signal or information to another constituent element or sends the signal or information to other constituent elements via another constituent element.

In particular, when one constituent element "sends" or "transmits" a signal or information to another constituent element, this means the final destination of the signal or information, and does not mean a direct destination. This holds true in "reception" of a signal or information. In addition, in this specification, when two or more pieces of data or information are "related" with each other, it means that when one piece of data (or information) is acquired, at least some of other pieces of data (or information) may be acquired based the acquired one piece of data (or information).

Further, although the terms including ordinal numbers such as a first, a second and the like used herein may be used to describe various constituent elements, such constituent elements may not be limited by terms including the ordinal numbers. The above terms may be used to distinguish a constituent element from another constituent element.

For example, a first constituent element may be named as a second constituent element in another description of the specification without departing from the scope of the present disclosure. Conversely, the second constituent element may be named as the first constituent element in another description of the specification.

Technical contents that are well known in a technical field to which the present disclosure pertains and are not directly related to the present disclosure will be omitted in describing example embodiments. This is to more clearly describe the gist of the present disclosure by omitting unnecessary description.

Further, in the accompanying drawings, some of constituent elements are illustrated on a large scale, omitted, or schematically illustrated. In addition, the size of each constituent element does not fully reflect the actual size. In each drawing, the same or corresponding elements will be indicated by the same reference numerals.

Advantages and features of the present disclosure, and a method for achieving them, will become more apparent by example embodiments described below in detail in conjunction with the accompanying drawings. However, the present disclosure is not limited to example embodiments which will be described later, and may be implemented in various different forms. The present example embodiments merely completely describe the present disclosure, and are provided to faithfully explain the scope of the present disclosure to those skill in the art to which the present disclosure pertains. The present disclosure is merely defined by the scope of the claims. Throughout the specification, like reference numerals refer to like constituent elements.

Further, it will also be understood that each block in process flowchart figures and combinations of the process flowchart figures may be executed by computer program instructions. These computer program instructions may be incorporated in a processor of a general-purpose computer, a special-purpose computer, or other programmable data processing equipment. The instructions, when executed by the processor of such computers or other programmable data processing equipment, may implement parts for performing functions described in the block(s) in the flowchart figures. These computer program instructions may be stored in a computer-usable or computer-readable memory that may oriented to the computer or other programmable data processing equipment to implement functions in a particular manner. Thus, the instructions stored in the computer-usable or computer-readable memory may produce a manufacture article incorporating instruction parts for performing the functions described in the block(s) of the flowchart figures. The computer program instructions may be incorporated in the computer or other programmable data processing equipment so that a series of Operations are performed on the computer or other programmable data processing equipment to implement processes executed by the computer. Thus, the instructions that operate the computer or other programmable data processing equipment may also provide operations of executing the functions described in the block(s) in the flowchart figures.

In addition, each block may represent a portion of a module, segment, or code that includes one or more executable instructions for executing assigned logical function(s). Further, it should also be noted that in some alternative implementations, the functions recited in the blocks may be executed in a non-sequence manner. For example, two successive blocks may be executed substantially in parallel or may be executed in the reverse order according to their functions.

In the following description, embodiments of the present disclosure will be described in detail with reference to the accompanying drawings so that those skilled in the art can easily carry out the present disclosure. The present disclosure may be embodied in many different forms and is not limited to the example embodiments described herein.

The present disclosure proposes a method or architecture that may effectively manage, accumulate, aggregate and deliver a large amount of pieces of event information that occur in the course of providing a platform-as-a-service (PaaS). A series of functions for this may be provided through a "collection server" or an "aggregation server" which will be described below, but are not necessarily limited thereto, and may also be provided in cooperation with a separate configuration. Furthermore, functions, structures, and the like of the "collection server" and the "aggregation server" are not limited by contents those described below, and may also be changed in such a range that those skilled in the art may easily apply for the purpose of effectively processing pieces of event information that occur in the course of providing the PaaS.

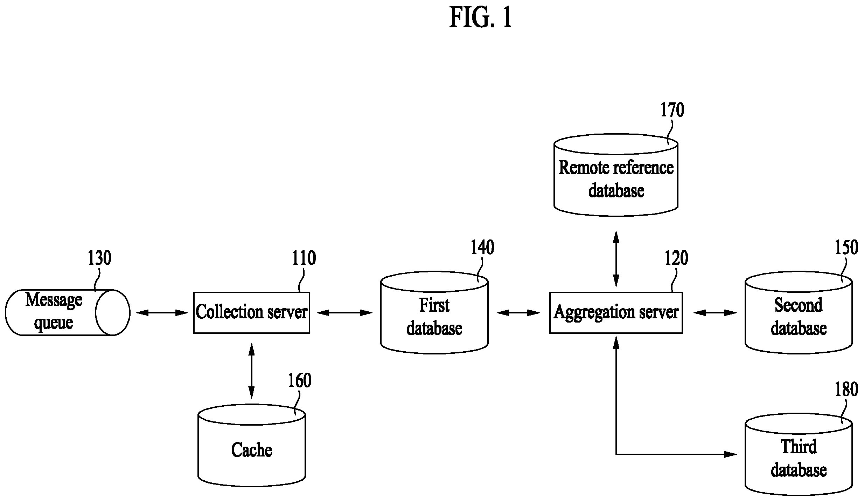

FIG. 1 is a schematic configuration view illustrating an environment in which a collection server and an aggregation server according to an example embodiment operate. Referring to FIG. 1, the environment in which a collection server 110 and an aggregation server 120 operate includes a message queue 130, a first database 140, a second database 150, a third database 180, a cache 160 and a remote reference database 170. In this case, the first database 140, the second database 150, the third database 180, the cache 160 and the remote reference database 170 may refer to storage mediums which are physically separated from one another, and may also be conceptually distinct from one another depending on positions at which data is stored in one storage medium in an example embodiment. That is, some of such constituent elements may refer to the storage medium, but other constituent elements may refer to physically-distinct storage mediums. Further, as will be understood by those skilled in the art, in addition to the constituent elements illustrated in FIG. 1, other general-purpose constituent elements may be further included in the electronic device 100.

The collection server 110 collects pieces of information about events occurring in an operating environment, and converts and records a format (schema) of the pieces of event information.

The aggregation server 120 applies a specific aggregation with respect to the collected event information to generate meaningful data inside and outside the operating environment, and stores the same in a database.

The message queue 130 functions as message-oriented middleware that transmits and receives data between applications using asynchronous messages, temporarily stores messages, and transmits and receives the messages in response to external requests. Herein, the term "messages" may typically refer to data such as requests, responses, error messages, or simple information, and may include the pieces of event information generated when the events occur in the present disclosure. Constituent subjects which supply the pieces of event information to the message queue 130 may include: (1) an application programing interface (API) of a platform that provides the operating environment; (2) the API of a client using an application service; (3) an external software development kit (SDK); (4) a media server infrastructure (video call, group call, live streaming, or the like); and/or (5) a content transmission network (for example, Amazon CloudFront), and the like.

Each of the constituent elements illustrated in FIG. 1 may communicate with each other in a network. The network as referred to herein includes, for example, a local area network (LAN), a wide area network (WAN), a value added network (VAN), a mobile radio communication network, a satellite communication network, and/or combinations therefor, and is a data communication network in a comprehensive sense such that constituent subjects of each network may smoothly communicate with each other, and may include a wired Internet, a wireless Internet, and/or a mobile radio communication network. The wireless communication may include, for example, but is not limited to, wireless LAN (Wi-Fi), Bluetooth, Bluetooth low energy (Bluetooth low energy), Zigbee, WFD (Wi-Fi Direct), UWB (ultra wideB and), infrared communication (IrDA, infrared Data Association), NFC (Near Field Communication), and the like.

The foregoing will be described in more detail below with reference to the drawings.

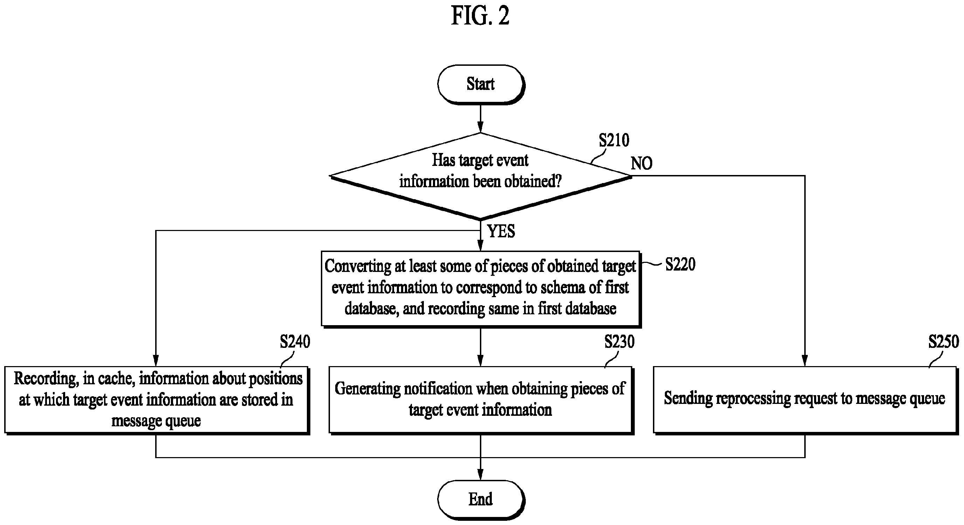

FIG. 2 is a flowchart for explaining an event processing method in a collection server according to an example embodiment. In the present disclosure, the event processing method will be described with a plurality of divided operations in the flowchart. However, at least some of the operations may be performed in a changed order, may be performed while being combined with another operation, may be omitted, may be performed while being classified into sub-operations, or may be performed together with one or more additional operations (not illustrated).

The collection server 110 checks whether or not pieces of target event information have been obtained from the message queue 130 in which the pieces of event information are stored while being sorted (in operation S210). In the present disclosure, the term "pieces of event information" may refer to information about events, in a broad sense, which occur when the application service is used, and may typically refer to information about communication-related events such as but not limited to a generation/closing of call space, a start/end of call, a start/end of live streaming, and/or the like.

In an example embodiment, the collection server 110 may be configured such that the pieces of event information inside the message queue 130 are matched to each of a set of stored partitions so as to function as a consumer with respect to the message queue 130. That is, there may be a plurality of partitions inside the message queue 130. In this case, the collection server 110 may include sub-collection servers that pull the pieces of event information sorted into each partition. In other words, the collection server 110 may be configured with two or more sub-collection servers according to the number of partitions inside the message queue 130. Each of the sub-collection servers may correspond to the partitions in a one-to-one relationship, and/or may correspond to N partitions (where N is a natural number of two or more) in an N-to-one relationship.

In an example embodiment, the message queue 130 may be configured to have an Apache Kafka-based architecture for high availability, scalability, distributed Processing and/or the like. In this case, the partitions inside the message queue 130 may refer to a unit that dispersedly processes data per topic that is the basis of data management.

Subsequently, when the pieces of target event information are checked to be obtained in operation S210, the collection server 110 converts at least some of the pieces of obtained target event information to correspond to the schema of the first database 140, and records the same in the first database 140 (in operation S220).

In an example embodiment, the collection server 110 may convert the pieces of obtained target event information according to a schema defined to include at least two of (1) identification information of an application executed by a user, (2) header information including the event's identification information, (3) information about a time at which the event occurs, and (4) information about an actual analysis target to be a target of an aggregation, and may record the same in the first database 140.

In an example embodiment, the first database 140, which is a non-relational database (NoSQL), may be a Scylla database (DB)-based database. This is because the non-relational database may accept and dynamically define various schemas and attributes of data, and may have high scalability, availability and performance. In particular, the Scylla DB may have an event-based high performance processing structure due to characteristics thereof.

Subsequently, the collection server 110 may generate a notification when obtaining the pieces of target event information (in operation S230).

In this regard, in an example embodiment, the collection server 110 may create a webhook corresponding to the pieces of target event information as the notification when obtaining the pieces of target event information. Subsequently, the collection server 110 may send the created webhook to a customer backend server of a user who uses the application. As a result, the user may conveniently perceive that an event occurred when using the application.

Further, in an example embodiment, when the pieces of target event information are checked to be obtained in operation S210, the collection server 110 may record, in the cache 160, information about positions at which the pieces of target event information are stored in the message queue 130 (in operation S240). In another example embodiment, the collection server 110 may further record, in the cache 160, summary information about the pieces of target event information in addition to the position information about the pieces of target event information.

Further, in another example embodiment, when the pieces of target event information are checked to not be obtained in operation S210, the collection server 110 may send a reprocessing request according to such an event collection failure to the message queue 130 (in operation S250). That is, according to such a reprocessing request, the pull of the pieces of target event information from the message queue 130 to the collection server 110 may be attempted again.

In this regard, before sending the reprocessing request to the message queue 130, the collection server 110 may send a signal indicating the event collection failure to a server that manages a platform of the operating environment, and may receive a signal that instructs the sending of the reprocessing request from the respective server and subsequently send the reprocessing request to the message queue 130. Further, when the event collection fails even after sending the reprocessing request a set number of times, the event collection server 110 may stop any further attempts to collect pieces of target event information and may send a signal indicating finally that the collection of the pieces of target event information has failed, to the server that manages the platform of the operating environment.

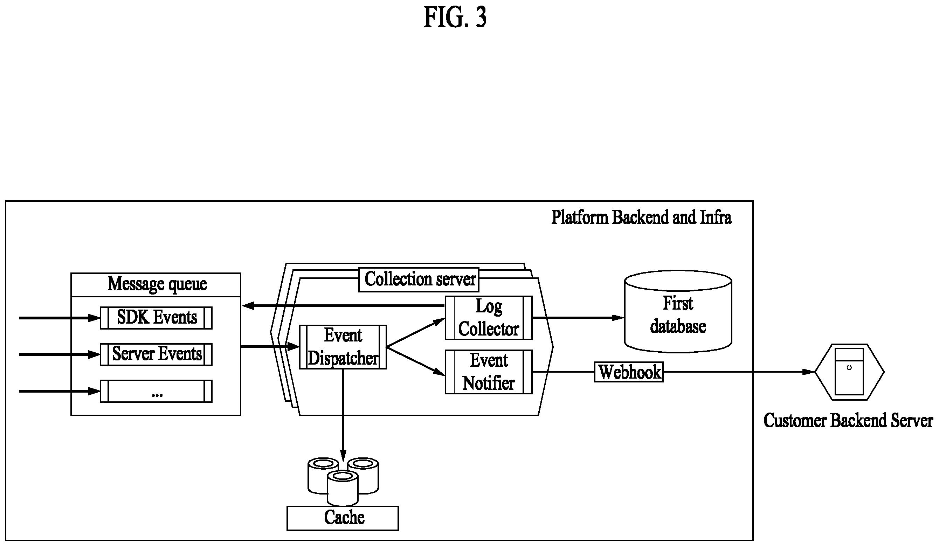

The event processing method in the collection server 110 described above with reference to FIG. 2 will be described in more detail later with reference to FIG. 3. FIG. 3 is an explanatory diagram illustrating an event processing process performed by the collection server 110, which illustrates a process in which the collection server 110 collects and records event information and creates a notification under the operating environment (platform backend and infrastructure). In FIG. 3, modules "event dispatcher", "log collector" and "event notifier" illustrated in the collection server 110 are illustrated to distinguish the concepts from one another according to a function of the collection server 110 for the sake of convenience in description, and do not refer to physically distinct constituent elements. In FIG. 3, multiple hexagonal shapes indicating the collection server 110 are displayed to overlap each other. This is to visually indicate that the collection server 110 may be matched to each of the partitions inside the message queue 130.

Specifically, information about SDK events pushed by an external SDK, server events supplied from an external server, and the like may be stored in the message queue 130. In an example embodiment, each piece of event information may be stored while being sorted into a partition according to the constituent subject that supplies the respective event information as illustrated.

The collection server 110 may obtain pieces of target event information to be collected among the pieces of event information stored while being sorted into the partition (using the event dispatcher), convert at least some of the pieces of target event information so as to correspond to the schema of the first database 140 to record the same in the first database 140 (using the log collector), and generate a notification (webhook) indicating that the pieces of target event information have been obtained to send the same to the customer backend server (using the event notifier). In addition, the collection server 110 may record position information of the pieces of target event information in the message queue 130 (using the event dispatcher).

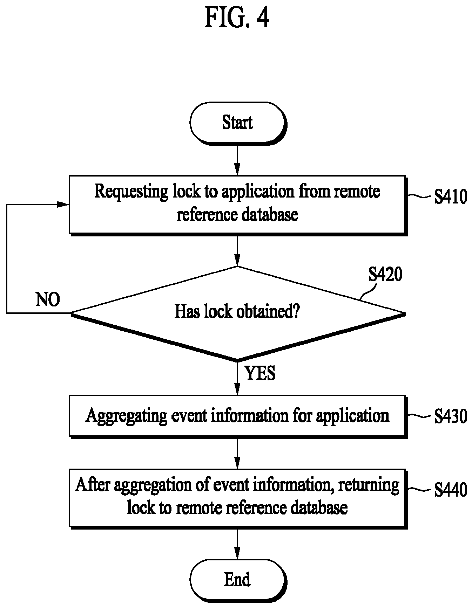

FIG. 4 is a flowchart for explaining an event processing method performed by the aggregation server according to an example embodiment.

The aggregation server 120 requests, from the remote reference database 170, a lock to the application that is a target of the aggregation of the event information (in operation S410). In the present disclosure, the lock refers to an exclusive right to aggregate pieces of event information generated in association with a specific application. While a server with the lock performs the aggregation process, another server cannot aggregate pieces of event information generated in association with the same application.

Further, in a case in which several servers aggregate the pieces of event information stored in the same storage space, the remote reference database 170 may be a database referenced by each server to check whether or not overlapping process is performed. This configuration makes it possible to prevent the locks from overlapping or conflicting with each other and implement an efficient distribution processing. The remote reference database 170 may be, for example, a redis-based DB, which is a database in which information about possession of the application and the lock is stored as unstructured data of key-value structure.

In an example embodiment, in requesting the lock from the remote reference database 170, the aggregation server 120 may specify identification information (for example, an application identification (ID)) capable of specifying an application which is an aggregation target, and request the lock from the remote reference database 170.

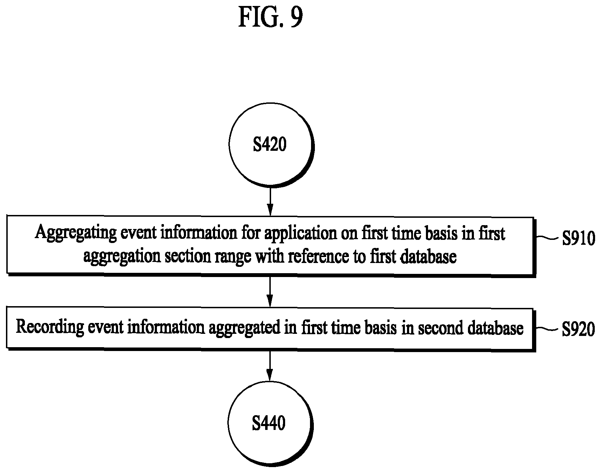

After obtaining the lock by requesting the lock for the application in operation S410, the aggregation server 120 may aggregate pieces of event information associated with the application in a specific aggregation interval on a specific time basis (in operations S420 and S430). A method and purpose of the aggregation may vary. This will be described below with reference to FIGS. 9 to 15.

After the aggregation of the pieces of event information is completed in operation S430, the aggregation server 120 returns the lock to the remote reference database 170 (in operation S440). Specifically, the aggregation server 120 requests the remote reference database 170 to return the lock, and the remote reference database 170 updates information about the server with the lock so that the return of the lock may be processed.

However, when the lock is not obtained in operation S410, the aggregation server 120 may request a lock from the remote reference database 170 for other applications for which pieces of event information are to be aggregated (target to be locked may be changed; and operation S410 is repeated).

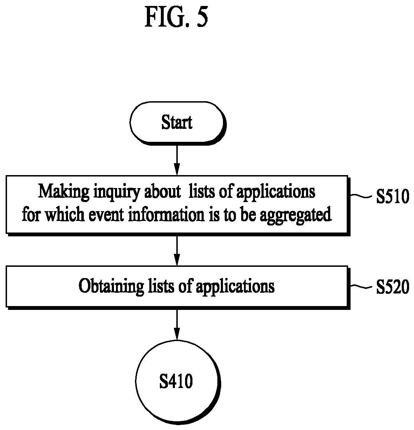

Further, in operations S410 to S440, there may be a plurality of applications as candidates to be locked by the aggregation server 120. FIG. 5 is a flowchart for explaining an event processing method when a plurality of applications is provided in the context of FIG. 4. FIG. 5 illustrates a process performed by aggregation server 120 prior to operations S410 to S440.

Specifically, prior to operation S410, the aggregation server 120 may make inquiry about lists of the applications for which pieces of event information are to be aggregated (in operation S510), and obtain the lists of the applications (in operation S520). In an example embodiment, the inquiry in operation S510 may be made to a module that manages settings of the applications for which pieces of event information are to be aggregated on a user (customer, client) basis. However, the present disclosure is not necessarily limited thereto. The inquiry may also be made to the remote reference database 170.

In an example embodiment, operations S410 to S440 described above with reference to FIG. 4 may be performed by looping the lists of applications obtained in operation S520. For example, assuming that the lists of applications obtained in S520 are A, B and C (the order of the lists is also assumed to be A, B and C), the aggregation server 120 may perform operations S410 to S440 on the application A to aggregate pieces of event information relating to the application A, and subsequently, perform operations S410 to S440 on the application B and the application C to aggregate pieces of event information relating to the application B and the application C. When the lock for the application A is not obtained, the aggregation server 120 may request a lock for the application B without the aggregation for the application A.

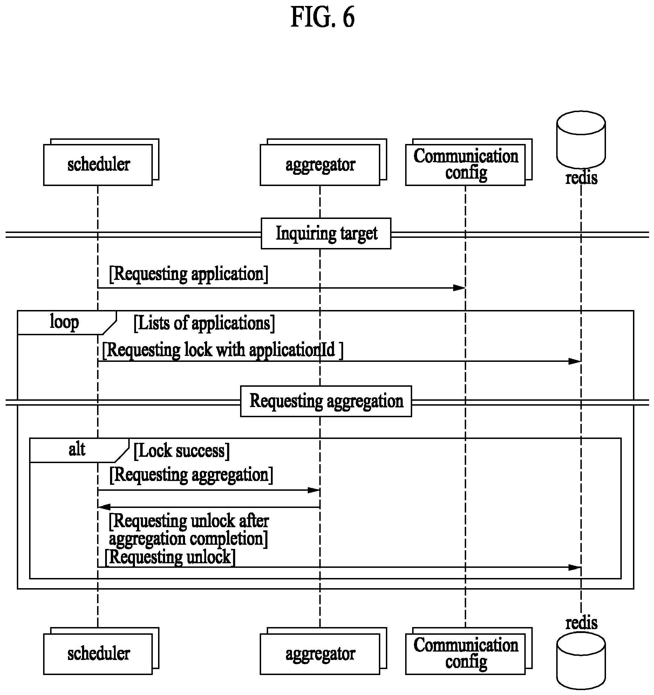

Hereinafter, the event processing method in the aggregation server 120 described above with reference to FIGS. 4 and 5 will be described in more detail with reference to FIG. 6. FIG. 6 is an explanatory diagram schematically illustrating an event processing process performed by the aggregation server 120. In FIG. 6, modules "scheduler", "aggregator", "communication config" are illustrated to conceptually distinguish from one another the functions of the aggregation server 120 and additional constituent elements for the sake of convenience in description, and do not refer to physically-distinct constituent elements. A module that provides an aggregation control function is represented by the module "scheduler", a module that performs an actual aggregation process is represented by the module "aggregator", and a module that manages a setting state of an application to be aggregated for each user (customer, client) is represented by the module "communication config". These modules may be included in the aggregation server 120, and may function as entities separate from the aggregation server 120.

As illustrated in FIG. 6, the aggregation server 120 may make inquiry about lists of the application(s) for which pieces of event information are to be aggregated (in an aggregation target inquiry), and loop a lock request process, an aggregation process and a lock return process for each list.

Specifically, the aggregation server 120 may designate an identification (ID) of a specific application and request a lock from the remote reference database 170 (such as but not limited to a redis DB). When obtaining the lock (lock success), the aggregation server 120 may aggregate pieces of event information for the specific application. After the aggregation is completed, the aggregation server 120 may request a return (unlock) of the lock from the remote reference database 170 (such as but not limited to the redis DB).

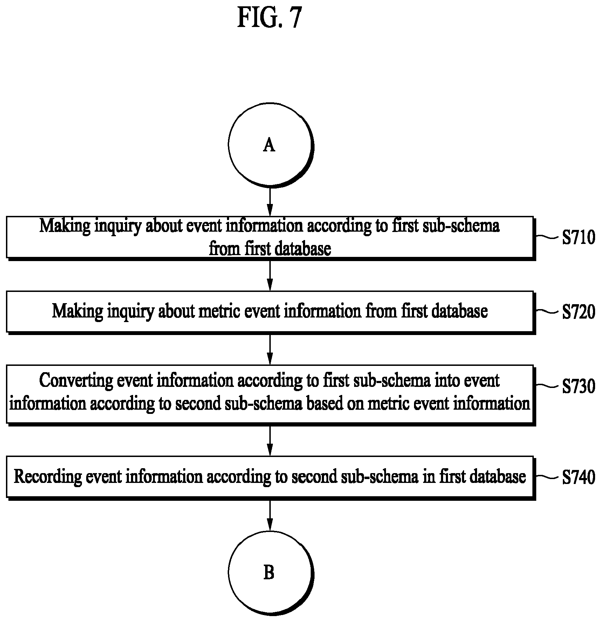

Further, the aggregation server 120 often needs to make inquiry about various formats of data from a database of various external services due to characteristics thereof, and download a copy of the respective data. In this case, changing a design of the aggregation server 120 itself to be in conformity with the data format is significantly inefficient, which may cause a limit in terms of management and maintenance. Therefore, it is necessary to perform a pre-processing process of uniformly converting various formats of data prior to the aggregation process on the data. FIG. 7 is a flowchart for explaining the pre-processing process in the aggregation server 120.

The aggregation server 120 may make inquiry about pieces of event information formatted according to a first sub-schema considering scope to be pre-processed, from the first database 140 in which pieces of event information collected by the collection server 110 are recorded (in operation S710).

Thereafter, the aggregation server 120 may make inquiry about metric event information, from the first database 140 (in operation S720).

Subsequently, based on the metric event information, the aggregation server 120 may convert the pieces of event information formatted according to the first sub-schema into pieces of event information formatted according to a second sub-schema (in operation S730).

In the present disclosure, the term "metric event information" may refer to separate event information for specifying at least one of a type and order of information for configuring the second sub-schema serving as a conversion criterion of the event information. That is, the metric event information includes information for determining how to process the event information in the format of the first sub-schema according to a purpose of the aggregation. For example, assuming that as a user uses a media service through an application, and an aggregation process for charging the user is required, the metric event information may include event information corresponding to a pair of an ID of the application and a session ID of the media service.

Subsequently, the aggregation server 120 may record the pieces of event information formatted according to the second sub-schema in the first database 140 (in operation S740).

As described in operations S710 to S740 above, one of the features of the pre-processing process is that the schema of the pieces of event information requested from the first database 140 is changed, and the pieces of event information according to the changed schema are recorded in the first database 140 again. Therefore, through the pre-processing process, the format of the pieces of event information collected by the collection server 110 may be changed, which facilitates the aggregation process by the aggregation server 120. Operation S710 is a read operation for the first database 140, and operation S740 is a write operation for the first database 140. In an example embodiment, even when databases to be accessed in both operations is the same as the first database 140, tables to be referenced in the first database 140 may be different from each other at the time of executing operation S710 and at the time of executing operation S740. That is, the table in the first database 140 to be referenced by the aggregation server 120 in the read operation may be different from the table in the first database 140 to be referenced by the aggregation server 120 in the write operation. Further, in an example embodiment, a database to be referenced by the aggregation server 120 to make inquiry about pieces of event information formatted according to the first sub-schema and a database in which pieces of event information formatted according to the second sub-schema are recorded by the aggregation server 120 may be different from each other. That is, the aggregation server 120 may make inquiry about pieces of event information formatted according to the first sub-schema with reference to an external database and record the same in the first database 140.

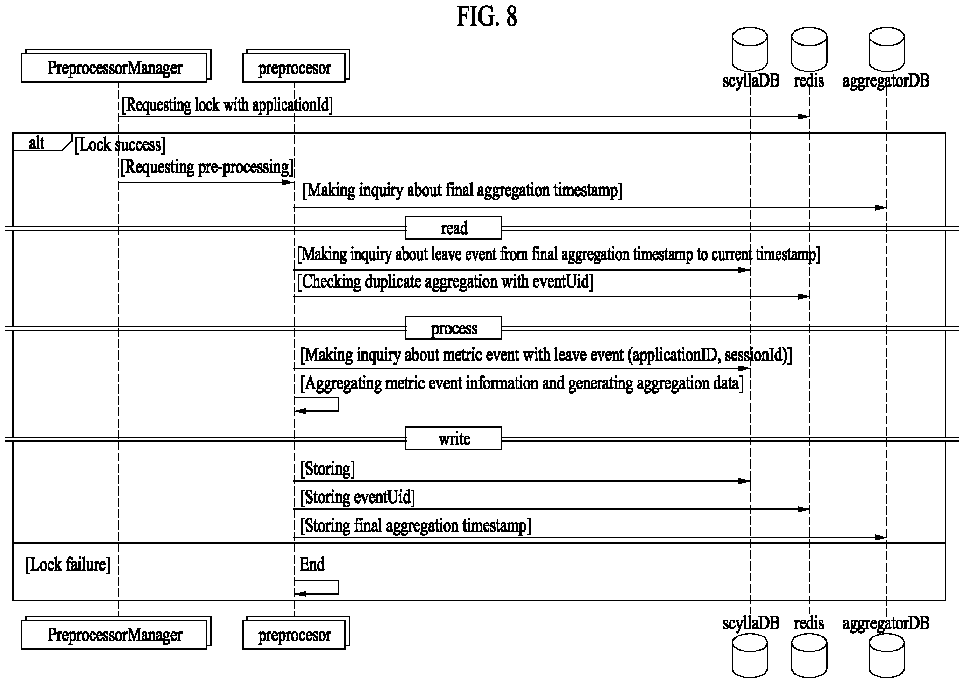

The pre-processing process in the aggregation server 120 described with reference to FIG. 7 above will be further described in more detail below with reference to FIG. 8. FIG. 8 is an explanatory view illustrating the pre-processing process in the aggregation server 120. Modules "PreprocessorManager" and "preprocessor" are illustrated to conceptually distinguish the functions of the collection server 110 for the sake of convenience in description, and do not refer to physically-distinct constituent elements. A module that provides a function of controlling the pre-processing process is represented by the module "PreprocessorManager", and a module that performs an actual pre-processing process is represented by the module "preprocessor". Constituent elements labelled as "scylla DB" "redis DB", "an aggregator DB" corresponds to representative kinds of databases used at the time of actual implementation, but are not limited to any particular database system(s). These databases conceptually correspond to the first database 140, the remote reference database 170, and the second database 150, respectively.

In an example embodiment, the aggregation server 120 may obtain a lock for an application (lock success) and make inquiry about a final aggregation timestamp at which the last aggregation is performed with reference to the second database 150. This is to determine a range of the pre-processing section. In the read operation, the aggregation server 120 may make inquiry about pieces of event information formatted according to the first sub-schema with reference to the first database 140 in the preprocessing section range from the final aggregation timestamp at which the last aggregation is performed to a current timestamp. Further, the aggregation server 120 may check whether or not the pieces of requested event information are aggregated in duplicate with reference to the remote reference database 170 based on event unique identification information (eventUID). Herein, the expression "check whether or not the pieces of requested event information are aggregated in duplicate" (hereinafter simply referred to as a "duplicate aggregation process") may mean that the aggregation server 120 checks in time-series manner whether or not the aggregation process is performed in duplicate. In another example embodiment, the above expression may mean that the aggregation server 120 check whether or not inquiry was made to the same event information together with a separate server.

Further, in the aggregation process, the aggregation server 120 may make inquiry about metric event information corresponding to a specific application (such as an application ID) and a specific session (such as a session ID) from the first database 140. Subsequently, the aggregation server 120 may convert the pieces of event information formatted according to the first sub-schema into pieces of event information formatted according to the second sub-schema based on the inquired metric event information.

Further, in the write operation, the aggregation server 120 may record the pieces of event information converted according to the second sub-schema in the first database 140. In an example embodiment, the aggregation server 120 may store the event unique identification information corresponding to the pieces of event information subjected to the pre-processing process in the remote reference database 170. This is to prevent the pre-processing process from being performed in duplicate on the same event information, through the duplicate aggregation process in the read operation as described above. Further, the aggregation server 120 may store a final aggregation timestamp at which a series of pre-processing processes are completed in the second database 150. The stored aggregation timestamp may function as a last aggregation timestamp that may be referenced later when determining the above-described pre-processing section range.

FIGS. 9 to 15 are diagrams for explaining various aggregation methods performed by the aggregation server 120. In order to aggregate pieces of event information and derive meaningful results available for improvement, extension and the like of an application in the future, the processing of aggregating the pieces of event information by the aggregation server 120 may be performed on a preset time basis. In this regard, a method for performing a primary aggregation process based on the pieces of event information collected by the collection server 110 and a method for performing a secondary aggregation process based on results obtained by processing pieces of pre-aggregated event information may be considered.

FIG. 9 is a flowchart for explaining a first type of aggregation process which corresponds to the primary aggregation process performed by the aggregation server.

Referring to FIG. 9, the aggregation server 120 may aggregate pieces of event information for an application on a first time basis in a first aggregation section range with reference to the first database 140 in which the pieces of event information collected by the collection server 110 are recorded (in operation S910). For example, in a case in which multiple users use a paid video call application service, it may be necessary to check a video call time in preset intervals, such as but not limited to every one (1) minute, to charge for the video call time used. In this case, the aggregation server 120 may aggregate pieces of event information for the application in one (1) minute intervals in an aggregation section range from a specific timestamp to a subsequent timestamp.

Subsequently, the aggregation server 120 may record the pieces of event information aggregated in one (1) minute intervals in the second database 150 (in operation S920). That is, in this example embodiment, there may be a difference in that the pieces of event information collected by the collection server 110 are recorded in the first database 140, and the pieces of event information processed by the aggregation server 120 are recorded in the second database 150.

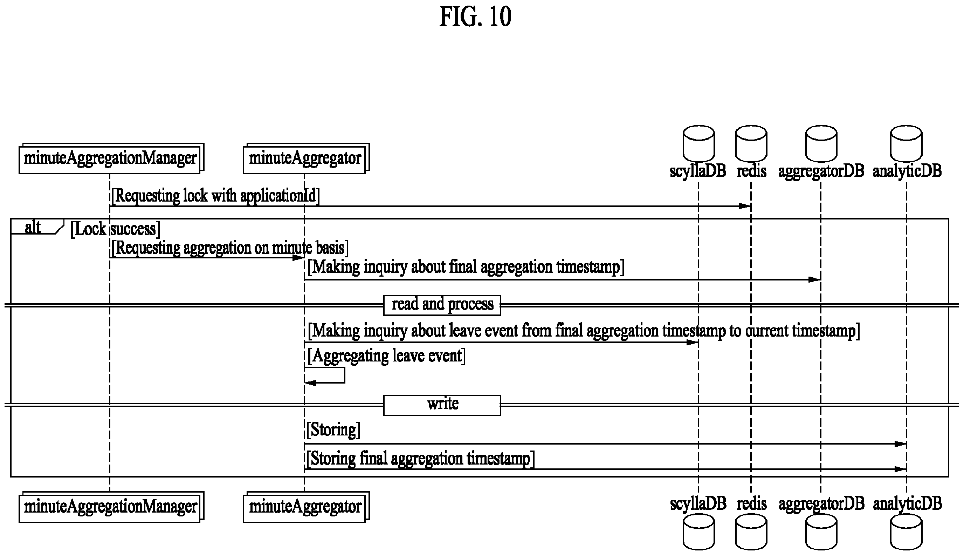

Next, the primary aggregation process in the aggregation server 120 described above with reference to FIG. 9 will further be described in more detail with reference to FIG. 10. FIG. 10 is an explanatory diagram illustrating the first type of aggregation process performed by the aggregation server 120. In FIG. 10, modules "minuteAggregationManager", and "minuteAggregator" are illustrated to conceptually distinguish the functions of the aggregation server 120 for the sake of convenience in description, and do not refer to physically-distinct constituent elements. A module that provides a function of controlling the first type of aggregation process is represented by the module "minuteAggregationManager", and a module that performs an actual aggregation process is represented by the module "minuteAggregator". Elements labelled "Scylla DB minute Aggregator", "redis DB", and "aggregator DB" corresponds to representative kinds of databases used at the time of actual implementation, but are not limited to any particular database system(s). These databases conceptually correspond to the first database 140, the remote reference database 170, and the second database 150, respectively. Further, a database "analytic DB" corresponds to a database in which a copy of data recorded in the aggregator DB is stored so that the data recorded in the aggregator DB may be easily accessed through an external API. In FIG. 10, the analytic DB is illustrated as a separate DB. However, in an example embodiment, the analytic DB may be a database that is not physically separated from the aggregator DB and may correspond to the second database 150.

In an example embodiment, after obtaining the lock for the application (lock success), the aggregation server 120 may make inquiry about a timestamp at which the last aggregation process was performed, from the second database 150. This is to determine the first aggregation section range. The aggregation server 120 may aggregate pieces of event information on a first time basis with reference to the first database 140 in the first aggregation section range, from the last aggregation timestamp to a current timestamp, in the read operation and the aggregation process.

Subsequently, the aggregation server 120 may record the pieces of event information aggregated on the first time basis in the second database 150 (or in the analytic DB). In an example embodiment, a final aggregation timestamp at which the first type of aggregation process is completed may be stored in the second database 150 (or in the analytic DB). The stored final aggregation timestamp may function as the last aggregation timestamp which may be referred to later when determining the first aggregation section range.

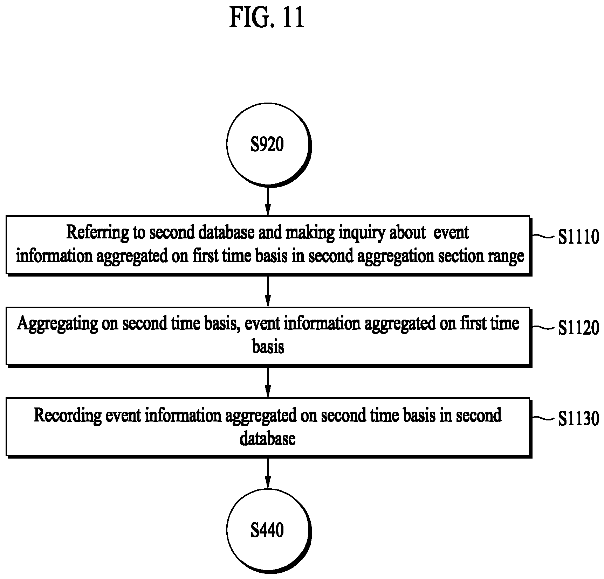

FIG. 11 is a flowchart for explaining a second type of aggregation process which corresponds to the secondary aggregation process performed by the aggregation server.

Referring to FIG. 11, the aggregation server 120 may refer to the second database 150 in which the pieces of event information aggregated on the first time basis are recorded, and make inquiry about the pieces of event information aggregated on the first time basis within a second aggregation section range (in operation S1110).

Subsequently, the aggregation server 120 may aggregate, on a second time basis, the pieces of event information aggregated on the first time basis (in operation S1120).

Subsequently, the aggregation server 120 may record pieces of event information aggregated on the second time basis in the second database 150 (in operation S1130).

For example, in a case in which multiple users use a video call application service, it may be necessary to check a video call time on a preset interval, such as but not limited to every one (1) day, in order to charge each user who uses an item that is billed on a one (1) day basis. In the case in which a period of aggregation time is relatively long as described above, when there are pieces of event information aggregated in advance on a relatively-short-time basis, processing such event information can be efficiently done by performing the aggregation process on a relatively long time basis and shorten the processing time. To do this, the second type of aggregation process has a feature of directly referring to the second database 150 without making inquiry about the pieces of event information collected by the collection server 110 with reference to the first database 140.

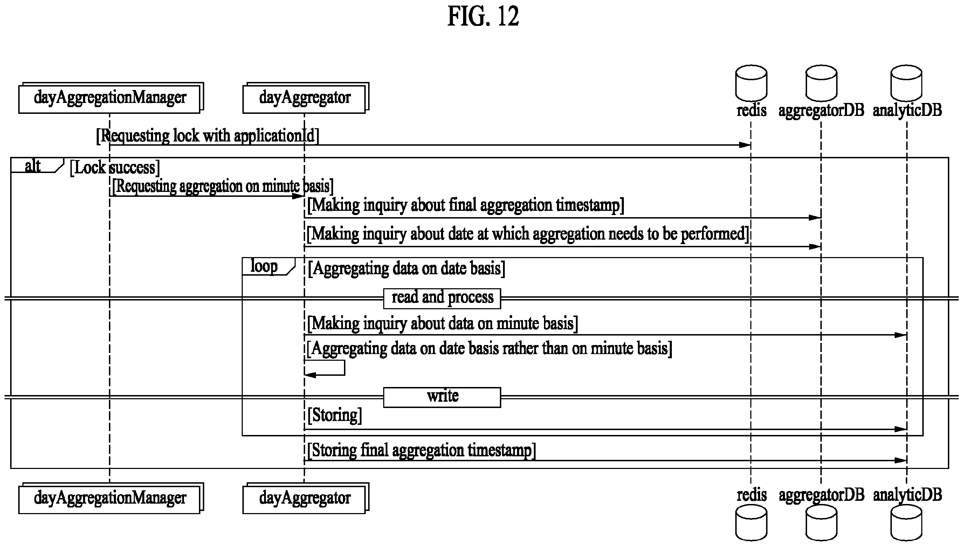

Next, the secondary aggregation process in the aggregation server 120 described with reference to FIG. 11 will be further described in more detail with reference to FIG. 12. FIG. 12 is an exemplary view for explaining the second type of aggregation process performed by the aggregation server 120. Like in FIG. 10, in FIG. 12, modules "dayAggregationManager" and "dayAggregator" are illustrated to conceptually distinguish the functions of the aggregation server 120 for the sake of convenience in description, and do not refer to physically-distinct constituent elements. A module that provides a function of controlling the second type of aggregation process is represented by the module "dayAggregationManager ", and a module that performs an actual pre-processing process is represented by the module "dayAggregator". Elements labelled "redis DB" and "aggregator DB" correspond to representative types of databases used at the time of actual implementation, but are not limited to any particular database system(s), and conceptually correspond to the remote reference database 170 and the second database 150, respectively. The analytic DB is also the same as or similar to that in FIG. 10.

In an example embodiment, after obtaining a lock for an application (lock success), the aggregation server 120 may make inquiry about a last aggregation timestamp at which the last aggregation process was performed with reference to the second database 150. Thereafter, the aggregation server 120 may make inquiry about a date for which aggregation needs to be performed. This date may be chosen from among dates on which aggregation was performed on a minute basis (one (1) minute basis) before the last aggregation timestamp. In some cases, on the date with the last aggregation timestamp, pieces of event information would have been aggregated up to the time of the last aggregation timestamp. Thereafter, the aggregation server 120 may make inquiry about pieces of event information aggregated on the first time basis (minute basis) on each inquiry date, and aggregate them on the second time basis (data basis). Thereafter, the aggregation server 120 may record the pieces of event information aggregated on the second time basis in the second database 150. When there are a plurality of dates to be inquired, the aggregation process for each date may be repeatedly performed in a loop manner.

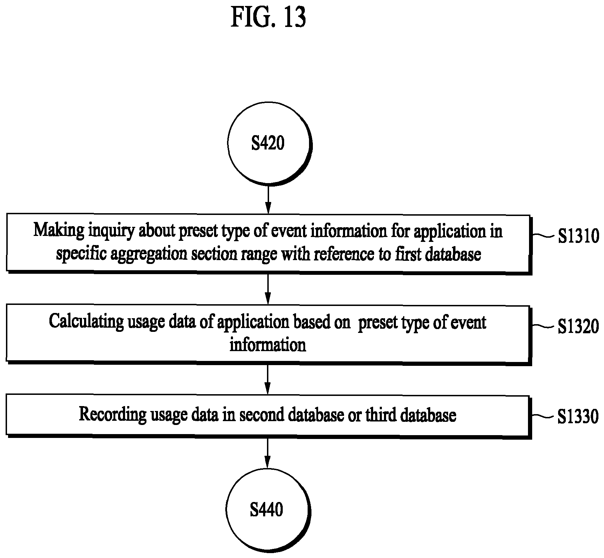

Further, pieces of event information to be aggregated by the aggregation server 120 may be embodied according to a specific purpose. For example, in a case in which a user uses various services through an application, aggregation results obtained by aggregating usages of the various services may be utilized to evaluate each service or set a charging policy that charges the user for using each service. FIG. 13 is a flowchart for explaining a method for aggregating usage data as a type of aggregation process.

First, the aggregation server 120 may make inquiry about pieces of event information of a preset type, for an application in a specific aggregation section range from the first database 140 in which the pieces of event information were collected by the collection server 110 (in operation S13 10).

Thereafter, the aggregation server 120 may calculate application usage in the specific aggregation section range based on the requested preset type of pieces of event information (in operation S1320).

In this regard, in an example embodiment in which an amount of data used in association with a "call" service is aggregated, the pieces of event information of the preset type may include call event information that occurs when a call is made through the application. Furthermore, the data may include at least one of the number of occurrences of call events and a call event duration time in the application. By applying such configurations to operations S1310 and S 1320, the aggregation server 120 may aggregate pieces of call event information that occurred when the user uses the call service through the application, and may calculate how many times the user has used the call service in the specific aggregation section range, or how many minutes the call service has been continuously used.

Further, in an example embodiment in which an amount of data used in association with a "call space" service is aggregated, the pieces of event information of the preset type may include pieces of call space event information that occur as a call space is established in the application. Furthermore, the data may include at least one of the number of occurrences of the pieces of call space event information and a call space event duration time in the application. By applying such configurations to operations S1310 and S1320, the aggregation server 120 may aggregate pieces of call event information that occurred as the user establishes the call space service through the application, and may calculate how many times the call space has been established in the specific aggregation section range, or how many minutes the call space has been continuously held.

Thereafter, the aggregation server 120 may record the usage data in the second database 150 or the third database 180 accessible by a provider who supplies the application or a consumer who uses the application (in operation S1330). Specifically, the usage data recorded in the second database 150 may be additionally stored in another database in the future, or may be provided in a form that is externally accessible through a separate API.

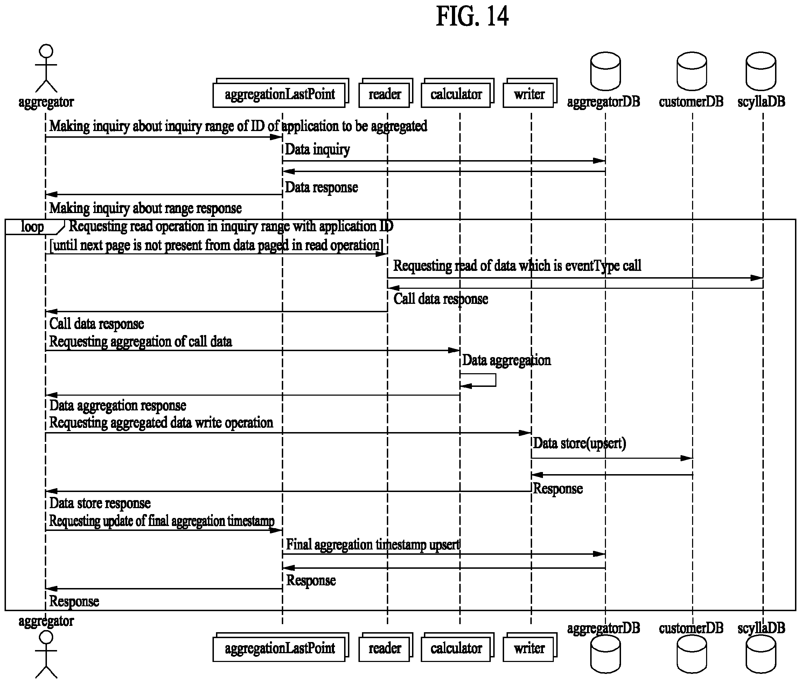

FIG. 14 illustrates a third type of aggregation process for aggregating the usage data in association with the "call" service. Modules "aggregator", "aggregationLastPoint", "reader", "calculator" and "writer" are illustrated to conceptually distinguish the function of the aggregation server 120 for the sake of convenience in description, and do not refer to physically-distinct constituent elements. In particular, the module "aggregationLastPoint", "reader", "calculator" and "writer" are illustrated according to an extended function of the module "aggregator". Elements labelled "ScyllaDB, "aggregatorDB, and "customerDB" correspond to representative kinds of databases used at the time of actual implementation, but are not limited to any particular database system(s), and conceptually correspond to the first database 140, the second database 150, and the third database 180, respectively.

In an example embodiment, the aggregation server 120 may check an event information inquiry range (aggregation section range) for an application to be aggregated, in the second database 150. This is to check the event information inquiry range for an application to be aggregated, which is specified by an application ID. For example, in FIG. 14, the event information inquiry range was set so as to search for data until there is no subsequent data to be found by the module "reader".

In an example embodiment, for an application specified by application identification information, the aggregation server 120 may request and aggregate a preset type of pieces of event information from the first database 140 in an inquiry range checked within the second database 150. For example, in FIG. 14, data whose eventType attribute value is "call" (call event information) was inquired and aggregated.

In an example embodiment, the aggregation server 120 may request and aggregate the pieces of event information to calculate application usage data in the inquiry range, and record the same in the second database 150 or the third database 180 to which a provider who provides the application or a consumer who uses the application is accessible. Based on the calculated application usage data recorded in the third database 180, the provider of the application may calculate an application fee or the like, and the consumer may check an expected fee or the like to be charged to him/her in advance. In this case, a mode in which the application usage data is recorded in the second database 150 or the third database 180 is not particularly limited, but an upsert (update and insert) mode may typically be applied.

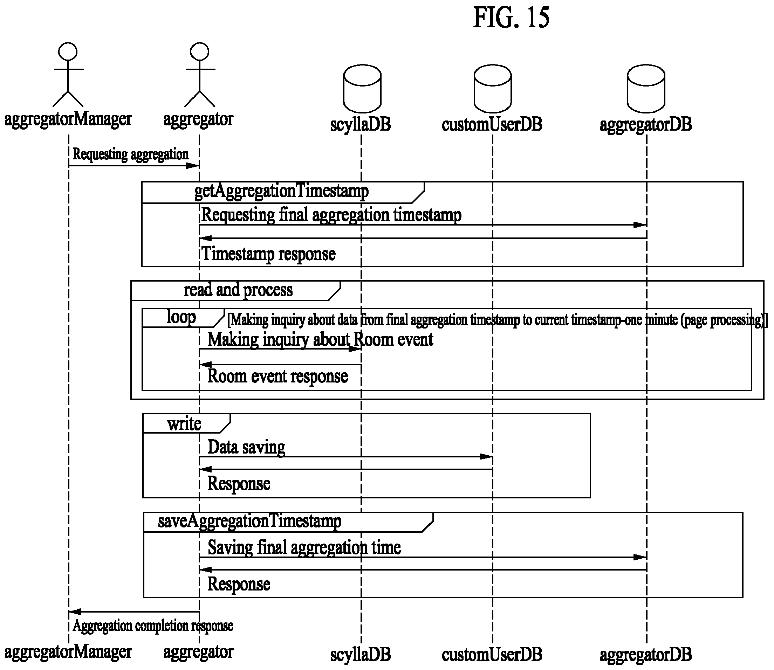

FIG. 15 illustrates a fourth type of aggregation process for aggregating data about usage of the "call space" service described above. Modules "aggregator", and "aggregatorManager" are illustrated to conceptually distinguish the functions of the collection server 110 for the sake of convenience in description, and do not refer to physically distinct constituent elements. Elements labelled "scyllaDB", "aggregatorDB", "customUserDB" correspond to represent kinds of databases used at the time of actual implementation, but are not limited to any particular database system(s), and conceptually correspond to the first database 140, the second database 150, and the third database 180, respectively.

In an example embodiment, the aggregation server 120 may check the latest aggregation timestamp with reference to the second database 150 to specify an aggregation section range.

In an example embodiment, the aggregation server 120 may make inquiry about event information (call space event information) whose event attribute value is room in a specific aggregation section range ("latest aggregation timestamp" to "current timestamp-1 minute"), and calculate the usage data based on the inquired event information (in the read operation and the aggregation process).

In an example embodiment, the aggregation server 120 may record the calculated usage data in the second database 150 or the third database 180. Further, the aggregation server 120 may update the latest aggregation timestamp in the second database 150 in consideration of a subsequent aggregation process.

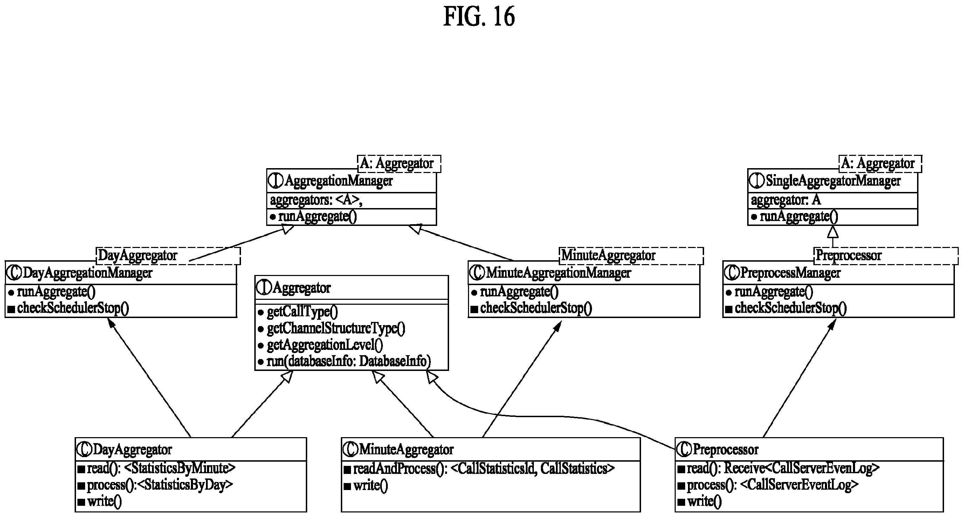

FIG. 16 is an explanatory view illustrating classes that implement the operation of the aggregation server for the sake of easier understanding of the relationship between the classes. The operation of the aggregation server is not limited to classified classes in FIG. 16, and is not constrained to those indicated in each class box.

A white arrow may mean that one class at which the arrow starts inherits another class the arrow points to. A black arrow may mean that one class at which the arrow starts is controlled by another class the arrow points to.

In consideration of the forgoing, the classes that implement the operation of the aggregation server 120 may be classified into a class group "Manager" which controls the aggregation process, a class group "Aggregator" which actually performs the aggregation process, a class group "PreprocessManager" which controls the pre-processing process, and a class group "Preprocessor" which actually performs the pre-processing process.

In particular, the class group "Manager" may be classified into an interface class (AggregationManager) in which only function specifications are included, and an aggregation control class (MinuteAggregationManager) and an aggregation control class (DayAggregationManager) on a first time basis (minute basis), which inherits the interface class.

Further, the class group "Aggregator" may be classified into an interface class (Aggregator) in which only function specifications are included, and an aggregation process class (MinuteAggregator) on the first time basis (minute basis), which inherits the interface class, and an aggregation process class (DayAggregator) on a second time basis (minute basis). In an example embodiment, the aggregation process class "MinuteAggregator" may further be inherited by an aggregation process class for minute-basis voice event information and an aggregation process class for minute-basis image event information. The aggregation process class "DayAggregator" may further be inherited by an aggregation process class for date-basis vocal event information and an aggregation process class for date-basis video event information.

Further, in addition to the example embodiments described above with reference to FIGS. 2 to 16, the collection server 110 and the aggregation server 120 may collect and aggregate pieces of event information in cooperation with each other as described in the following example embodiments.

The collection server 110 checks whether or not pieces of target event information have been obtained from the message queue 130 in which the pieces of event information are stored while being sorted. When the pieces of target event information are checked to be obtained, the collection server 110 may convert at least some of the obtained pieces of target event information so as to correspond to a schema of the first database 140, and records the same in the first database 140. Then, the aggregation server 120 may aggregate the pieces of event information recorded in the first database 140 on a specific time basis in a specific aggregation section range with reference to the first database 140.

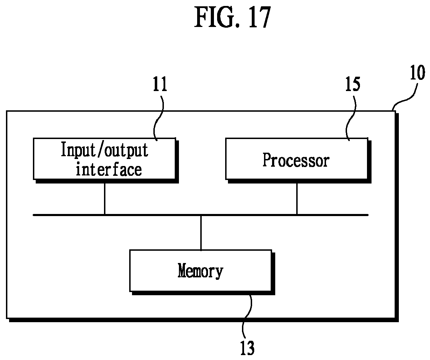

FIG. 17 is a block diagram illustrating a collection server or an aggregation server according to an example embodiment. In an example embodiment, an electronic device 10 illustrated in FIG. 17 may function as at least one of a collection server 110 and an aggregation server 120, and may include an input/output interface 11, a memory 13 and a processor 15. The electronic device 10 may be connected to the message queue 130, the first database 140, the second database 150, the cache 160, the remote reference database 170 or the third database 180, and the like via the input/output interface 11, and may exchange data with each other.

The processor 15 may perform at least one of the above-described methods. The memory 13 may store information for performing the at least one method, and may be a volatile memory or a non-volatile memory.

The processor 15 may execute a program and control the electronic device 10 to provide information. A program code executed by the processor 15 may be stored in the memory 13.

In a case in which the electronic device 10 functions as the collection server 110, the processor 15 may be connected to the input/output interface 11 and the memory 13 to check whether or not pieces of target event information are obtained from the message queue 130 in which pieces of event information are stored while being sorted. When the pieces of target event information are checked to be obtained, the processor 15 may convert at least some of the obtained pieces of target event information so as to correspond to the schema of the first database 140, record the same in the first database 140, and generate a notification indicating that the pieces of target event information are obtained.

Further, in a case in which the electronic device 10 functions as the aggregation server 120, the processor 15 may be connected to the input/output interface 11 and the memory 13 to request, with respect to the remote reference database 170, a lock for an application for which pieces of event information are to be aggregated. When the lock is obtained, the processor 15 may aggregate the pieces of event information for the application on a specific time basis in a specific aggregation section range. After the aggregation of the pieces of event information is completed, the processor 15 may return the lock to the remote reference database 170.

Further, in a case in which the electronic device 10 functions as both the collection server 110 and the aggregation server 120, the processor 15 is connected to the input/output interface 11 and the memory 13 to check whether or not pieces of target event information has been obtained from the message queue 130 in which pieces of event information are stored while being sorted. When the pieces of target event information are checked to be obtained, the processor 15 may convert at least some of the obtained pieces of target event information so as to correspond to the schema of the first database 140 and record the same in the first database 140. Further, with reference to the first database 140, the processor 15 may aggregate the pieces of event information recorded in the first database 140 on a specific time basis in a specific aggregation section range.

In the electronic device 10 illustrated in FIG. 1, only constituent elements relating to the example embodiment are illustrated. Therefore, those skilled in the art can understand that, in addition to the constituent elements illustrated in FIG. 17, other general-purpose constituent elements may be further included in the benefit information providing system 1.

More specifically, the electronic device according to example embodiments described above may include a processor, a permanent storage such as a memory or a disk drive storing program data and executing the same, a communication port for communication with external devices, user interface devices such as a touch panel, keys, and buttons, and the like. The methods that are implemented as software modules or algorithms may be stored as program instructions or computer-readable codes executable by the processor on a computer-readable recording medium. Here, examples of the computer-readable recording medium may include magnetic storage media (for example, read only memory (ROM), random access memory (RAM), floppy disk, or hard disk), optically readable media (for example, compact disk-read only memory (CD-ROM) or digital versatile disk (DVD)), and the like. The computer-readable recording medium may be distributed over computer systems connected to each other via a network, and thus, the computer-readable codes may be stored and executed in a distributed fashion. This medium may be read by the computer, stored in the memory, and executed by the processor.

The present example embodiments may be described in terms of functional block components and various processing operations. Such functional blocks may be realized by any number of hardware and/or software components configured to perform specified tasks. For example, embodiments may employ various integrated circuit (IC) components, such as memory elements, processing elements, logic elements, look-up tables, and the like, which may perform a variety of tasks under the control of one or more microprocessors or other control devices. Similar to a case in which the constituent elements are implemented using software programming or software elements, the present example embodiments may be implemented with any programming or scripting language such as C, C++, Java, assembler language, or the like, with the various algorithms being implemented with any combination of data structures, processes, routines or other programming elements. Functional aspects may be implemented in algorithms that are executed on one or more processors. Furthermore, the example embodiments described herein could employ related arts for electronic configuration setting, signal processing and/or data processing and the like. The terms "mechanism," "element," "means," and "configuration" may be used broadly and are not limited to mechanical or physical embodiments. These terms may include meaning of a series of routines of software in association with a processor, for example.

The above-described example embodiments are merely examples and other example embodiments may be implemented within the scope of the following claims.

## Claims

1. A computer-implemented method for processing pieces of event information in a collection server (110), the method comprising:
checking (S210) whether pieces of target event information have been obtained from a message queue (130) in which the pieces of event information have been stored while being sorted;
when the pieces of target event information are checked to be obtained, converting (S220) at least some of the obtained pieces of target event information so as to correspond to a schema of a first database (140) and recording the converted pieces of target event information in the first database (140); and
generating a notification (230) indicating that the pieces of target event information are obtained.

2. The method of Claim 1, wherein the collection server (110) is matched to each partition in which the pieces of event information in the message queue are stored and is configured to function as a consumer for the message queue (130).

3. The method of Claim 1 or 2, further comprising: when the pieces of target event information are checked to be obtained, recording (S240) position information of the pieces of target event information in the message queue (130) in a cache (160).

4. The method of any of the Claims 1 to 3, further comprising: when the pieces of target event information are checked to not be obtained, sending (S250) a reprocessing request according to an event collection failure to the message queue (130).

5. The method of any of the Claims 1 to 4, wherein the generating of the notification includes generating a webhook corresponding to the pieces of target event information.

6. A computer-implemented method for processing pieces of event information in an aggregation server (120), optionally according to any of the Claims 1 to 5, the method comprising:
requesting (S410) a lock for an application for which the pieces of event information are to be aggregated to a remote reference database (170);
when the lock is obtained, aggregating (S430) the pieces of event information for the application on a specific time basis in a specific aggregation section range; and
after the aggregating of the pieces of event information is completed, returning (S440) the lock to the remote reference database (170).

7. The method of Claim 6, wherein, when the lock is not obtained, the requesting of the lock is performed with respect to another application for which the pieces of event information are to be aggregated.

8. The method of Claim 6 or 7, further comprising:
making (S510) inquiry about a list of applications for each of which the pieces of event information are to be aggregated; and
obtaining (S520) the list of the applications, and
wherein the requesting of the lock, the aggregating the pieces of event information and the returning of the lock are repeatedly performed in a loop manner with respect to the list of the applications.

9. The method of any of the Claims 6 to 8, further comprising:
making (S710) inquiry about pieces of event information according to a first sub-schema in a set preprocessing section range with reference to a first database (140) in which the pieces of event information collected by a collection server are recorded;
making (S720) inquiry about metric event information with reference to the first database (140);
converting (S730) the pieces of event information according to the first sub-schema into pieces of event information according to a second sub-schema based on the metric event information; and
recording (S740) the pieces of event information according to the second sub-schema in the first database.

10. The method of any of the Claims 6 to 9, wherein the aggregating of the pieces of event information includes:
aggregating (S910) the pieces of event information for the application on a first time basis in a first aggregation section range with reference to a first database (140) in which the pieces of event information collected by a collection server (110) are recorded; and
recording (S920) the pieces of event information aggregated on the first time basis in a second database (150).

11. The method of Claim 10, wherein the aggregating of the pieces of event information includes:
making (S1110) inquiry about pieces of event information aggregated on the first time basis in a second aggregation section range with reference to the second database (150);
aggregating (S1120), on a second time basis, the pieces of event information aggregated on the first time basis; and
recording (S1130) the pieces of event information aggregated on the second time basis in the second database.

12. The method of any of the Claims 6 to 11, wherein the aggregating of the pieces of event information includes:
making (S1310) inquiry about pieces of event information of a preset type for the application in a specific aggregation section range with reference to a first database (140) in which the pieces of event information collected by a collection server (110) are recorded;
calculating (S1320) usage data of the application in the specific aggregation section range based on the requested pieces of event information of the preset type; and
recording (S1330) the usage data of the application in a second database (150) or a third database (180) accessible by a provider who provides the application or a consumer who uses the application.

13. The method of Claim 12, wherein the pieces of event information of the preset type include call event information generated when a call is made in the application, and
wherein the usage data includes at least one of a number of occurrences of call events and a call event duration time in the application.

14. The method of Claim 12 or 13, wherein pieces of event information of the preset type include call space event information that occurs when a call space is established in the application, and
wherein the usage data includes at least one of a number of occurrences of call space events and a call space event duration time in the application.

15. A computer-implemented method for processing pieces of event information in a collection server (110) and an aggregation server (120), the method comprising:
checking (S210) whether pieces of target event information has been obtained from a message queue (130) in which the pieces of event information has been stored while being sorted;
when the pieces of target event information are checked to be obtained, converting (S220) at least some of the obtained pieces of target event information so as to correspond to a schema of a first database (140) and recording the converted pieces of target event information in the first database (140); and
aggregating (S910) the pieces of event information recorded in the first database (140) on a specific time basis in a specific aggregation section range with reference to the first database (140).
